# EUROPÄISCHE PATENTSCHRIFT

(11) **EP 1 098 920 B1**
(45) Veröffentlichungstag und Bekanntmachung des Hinweises auf die Patenterteilung: **15.05.2002**
(21) Anmeldenummer: 99936501.8
(22) Anmeldetag: 08.07.1999
(51) Int. Cl.: C08G 18/10, B65D 83/14, C08J 9/12

(54) **PREPOLYMERABMISCHUNG MIT SILAN-TERMINIERTEN PREPOLYMEREN**
PREPOLYMER MIXTURES WITH SILANE-TERMINATED PREPOLYMERS
MELANGE DE PREPOLYMERES COMPORTANT DES PREPOLYMERES A TERMINAISON SILANE

(30) Priorität: 13.07.1998 DE 19831285
(43) Veröffentlichungstag der Anmeldung: 16.05.2001
(73) Patentinhaber: RATHOR AG, 9050 Appenzell (CH)
(72) Erfinder: SOMMER, Heinrich, CH-9050 Appenzell (CH); PAULS, Mathias, CH-9057 Weissbad (CH)
(74) Vertreter: Thiel, Christian, Dr. Dipl.-Chem.
(86) Internationale Anmeldenummer: EP9904811
(87) Internationale Veröffentlichungsnummer: WO0004069

(56) Entgegenhaltungen:
- EP-A- 0 480 342
- DE-A- 19 653 388
- GB-A- 983 850
- US-A- 4 769 395

## Beschreibung

Die Erfindung betrifft eine Prepolymerabmischung zur Erzeugung von Dichtund Dämmschäumen, wobei die Prepolymerabmischung eine Prepolymerkomponente und eine Treibgaskomponente sowie Zusatzstoffe für die Schaumbildung enthält. Die erfindungsgemäße Prepolymerabmischung ist zur Erzeugung von feuchtigkeitshärtenden einkomponentigen und zweikomponentigen Dämmschäumen aus Druckdosen geeignet.

Dämmschäume zum Ausschäumen von Hohlräumen werden vielfach als Ortschäume aus Druckdosen unter Verwendung von Polyurethan-Prepolymerabmischungen erzeugt. Hauptsächliche Anwendungsgebiete sind das Bauwesen, aber auch technische Produkte, bei denen Hohlräume zur Vermeidung von Schwitzwassernestern verfüllt werden müssen.

Prepolymere zur Erzeugung von Polyurethan-Dämmschäumen besitzen zur Vernetzung befähigte Polyisocyanatgruppen, die mit einer Polyolkomponente oder Wasser unter Bildung des eigentlichen Polymers reagieren. Die Schaumstruktur wird durch bei der Reaktion mit Wasser erzeugtes CO₂ und/oder in der Prepolymerabmischung vorhandenes Treibgas erzeugt.

Die in den Prepolymerabmischungen zur Erzeugung von Polyurethan-Dämmschäumen vorhandenen Isocyanatgruppen sind hochreaktiv und wirken lebendem Gewebe gegenüber ausgesprochen reizend und toxisch. Soweit die Abmischungen mit Treibgasen aus Aerosoldosen abgegeben werden, besteht, insbesondere bei unsachgemäßer Handhabung, die Gefahr der Aerosolbildung, so daß isocyanatgruppenhaltiges Material auf die Haut und in die Atemwege gelangen kann. Dies ist hochgradig unerwünscht.

Die in Druckdosen zur Schaumerzeugung verwandten Prepolymerabmischungen auf Polyisocyanatbasis enthalten, neben relativ hochmolekularen Prepolymeren, zumeist auch nicht oder nur zu niedermolekularen Prepolymeren abreagiertes Polyisocyanat. Diese Bestandteile der Prepolymerabmischungen bilden, wegen ihrer höheren Flüchtigkeit, das eigentliche Gefährdungspotential und sind deshalb unerwünscht. Neben diesem Gefährdungspotential, das bei sachgemäßer Handhabung eher als niedrig einzustufen ist, besteht aber bei zahlreichen Anwendern ein Akzeptanzproblem, das durch die Deklarierungspflicht derartiger Produkte als toxisch und die Einstufung der entleerten Behälter als Sonderabfall noch gefördert wird. Dies gilt insbesondere für den Heimwerker, der sein Produkt in Baumärkten bezieht.

Insgesamt haben sich aber Polyurethan-Dämmschäume außerordentlich bewährt. Diese Schäume haben - neben den bekannt guten Dämmeigenschaften - eine Reihe von weiteren positiven Eigenschaften, die ihre Anwendung für viele Einsatzzwecke gefördert haben. Dazu gehören u.a. eine außerordentlich einfache Handhabung, schnelle Aushärtung, gute Anbindung an vorhandene Strukturen, gute Füll- und Ausschäumcharakteristiken, gute Witterungsbeständigkeit und nicht zuletzt eine gute Körperverträglichkeit des ausgehärteten Produkts. In der Tat kann man fertige Polyurethan-Dämmschäume als nicht-toxisch einstufen.

Es gibt eine Reihe von Maßnahmen, die Toxizität herkömmlicher verschäumbarer Prepolymerabmischungen für Druckdosen herabzusetzen, insbesondere durch Auswahl bestimmter Polyisocyanate zur Prepolymerherstellung und durch Herabsetzung des Anteils monomerer Bestandteile in den Prepolymerabmischungen. Insgesamt sind mit diesen Maßnahmen auch Erfolge erzielt worden, jedoch löst dies nicht das oben erwähnte Akzeptanzproblem, da derartige "entschärfte" Abmischungen nach wie vor isocyanathaltig sind.

Es wäre deshalb wünschenswert, über Prepolymerabmischungen zu verfügen, die Dämmschäume bilden, die die Eigenschaften herkömmlicher Polyurethanschäume aufweisen, jedoch im Prepolymer nicht mehr über freie lsocyanatgruppen verfügen.

Insbesondere sollen solche Prepolymerabmischungen aus Aerosol- bzw. Druckdosen herkömmlicher Art, d.h. ohne daß die Technik verändert werden muß, ausgebracht werden können. Die Handhabung solcher Schäume sollte in allen Punkten denen herkömmlicher Produkte entsprechen.

Einkomponenten-Polyurethanschäume werden zumeist durch Ausbringung der Prepolymerzusammensetzung aus Aerosoldosen mit Hilfe von Treibmitteln an Ort und Stelle mit einem Raumgewicht von 10 bis 50 g/l verarbeitet. Diese sogenannten 1K-Schäume sind feuchtigkeitshärtend, d.h., sie können alleine mit der in der Luft enthaltenen Feuchtigkeit aushärten.

Zweikomponenten-Polyurethanschäume benötigen zum Aushärten der Prepolymerzusammensetzung eine zweite reaktive Komponente, in der Regel ein Polyol, Polyamin oder Wasser, die unmittelbar vor der Schaumbildung zugesetzt werden muß. Die Aushärtung dieser sogenannten 2K-Schäume kann durch Katalysatoren beschleunigt werden. Raumgewichte bei 2K-Schäumen liegen typischerweise bei 10 bis 100 g/l.

Übergangsformen zwischen 1K- und 2K-Schäumen sind möglich. In diesem Fall wird dem Prepolymer vor dem Ausbringen eine zur Umsetzung der Isocyanatgruppen nicht ausreichende Menge einer zweiten Komponente, wie vorstehend genannt, zugesetzt. Für diese Übergangsformen hat sich die Bezeichnung "1,5K-Schäume" ausgebildet.

Soweit die Aushärtung der Schäume mit in der umgebenen Atmosphäre enthaltenem oder mit zugesetztem Wasser erfolgt, wird bei der Reaktion der Isocyanatgruppen CO₂ freigesetzt, das den Schaumbildungsprozeß bedingt oder fördert. Je nach Bedarf kann der Schaumbildungsprozeß durch Treibgase unterstützt oder herbeigeführt werden. Als Treibgase werden derzeit zumeist bei Raumtemperatur gasförmige Fluorkohlenwasserstoffe, Kohlenwasserstoffe und/oder Dimethylether verwandt, aber auch CO₂, N₂ oder N₂O.

Prepolymerabmischungen zur Erzeugung von Polyurethan-Dämmschäumen aus Druckdosen bestehen aus mehreren Komponenten. Zum einen sind dies das eigentliche Prepolymer, das ausgehend von einem Polyisocyanat und einem Polyol erzeugt wird. Das Prepolymer enthält nach wie vor reaktive Isocyanatgruppen, die mit einem Vernetzer oder Wasser zum verschäumbaren Polymer abreagieren.

Darüber hinaus enthalten diese Prepolymerabmischungen Zusätze, wie z. B. Flammschutzmittel, Zellregulantien, Stabilisatoren, Weichmacher, Steilmittel zur Einstellung der Viskosität oder anderer wichtiger Eigenschaften sowie Katalysatoren. Zumeist sind diese Zusätze gegenüber den Isocyanatgruppen des Prepolymers unreaktiv, jedoch gibt es hier Ausnahmen, bei denen diese Zusätze reaktiv in das Produkt eingebunden werden, ohne ihre Funktion zu verlieren. Zu nennen wären beispielsweise halogenhaltige Polyole, die bei der Prepolymerbildung eingesetzt werden und flammhemmend wirken.

Das Treibmittel ist die dritte Komponente der Prepolymerabmischung.

Um das erfindungsgemäße Ziel, ein verschäumbares Prepolymer ohne freie Isocyanatgruppen, zu erreichen, wird eine Prepolymerabmischung benötigt, die die vorstehend genannten Eigenschaften von 1K-, 1,5K- und 2K-Abmischungen aufweist, d.h. unter üblichen und bekannten Bedingungen in eine Aerosoldose eingebracht, darin gelagert und unter Reaktion mit einer zweiten Komponente oder der Luftfeuchtigkeit ausgebracht und verschäumt werden kann.

Es wurde nun überraschend gefunden, daß eine Prepolymerabmischung der eingangs genannten Art, bei der das Prepolymer ein Silan-terminiertes Polyurethan-Prepolymer mit wenigstens zwei Si(OR)ₓ(R)₃₋ₓ-Gruppen im Molekül ist, wobei R jeweils für sich für einen Alkylrest mit 1 bis 6 Kohlenstoffatomen steht und x eine ganze Zahl von 1 bis 3 ist, als vollwertiger Ersatz für herkömmliche Polyurethan-Prepolymerabmischungen verwandt werden kann.

Die erfindungsgemäßen Prepolymerabmischungen bestehen aus der Prepolymerkomponente, einer Treibgaskomponente und Zusatzstoffen zur Einstellung der Abmischung und der erzeugten Dämmschäume.

Bei der Prepolymerkomponente der erfindungsgemäßen Prepolymerabmischung handelt es sich um ein herkömmliches Polyurethanprepolymer; dessen Isocyanatgruppen durch Silangruppen der vorstehend genannten Art ersetzt sind. Diese Silangruppen enthalten wenigstens eine Alkoxygruppe. Vorzugsweise ist das Prepolymer mit Trimethoxysilyl- oder Triethoxysilylgruppen terminiert. Alkoxysilylgruppen sind äußerst hydrolyseempfindlich und reagieren mit Wasser unter Abspaltung von Alkanol zu Siloxanen. Dabei spielt es keine Rolle, ob das Wasser als solches zugesetzt wird, als Luftfeuchtigkeit zugegen ist oder in einem angrenzenden Substrat vorhanden ist. So besteht auch eine hohe Reaktivität gegenüber Hydroxy-Gruppen enthaltenden mineralischen Materialien, wie sie vielfach in Holz, Beton oder Mauerwerk vorliegen. Die erfindungsgemäßen Silan-terminierten Prepolymere sind somit zur Vernetzung unter Ausbildung von Siloxanen und zur Anbindung an OH-Gruppen enthaltenden Substraten befähigt. Die Reaktivität mit Wasser und OH-Gruppen kann durch geeignete Katalysatoren noch beschleunigt werden. Insoweit besitzen die erfindungsgemäßen Prepolymere eine Reaktivität und Eigenschaften, wie sie Isocyanat-terminierten Polyurethanprepolymeren zu eigen ist.

Es ist festzuhalten, daß die erfindungsgemäße Prepolymere Silan-terminiert sind, im übrigen aber den Kern bz. Rücken eines herkömmlichen Polyurethan-Prepolymers aufweisen, d.h. im Kern auf der Reaktion eines üblichen Polyisocyanats mit einer üblichen Polyol beruhen.

Zur Herstellung von üblichen Prepolymeren wird zumeist von einigen wenigen gängigen Polyisocyanaten ausgegangen, wie Diisocyanatodiphenylmethan (MDI), sowohl in roher Form (roh-MDI oder technisches MDI) als auch in Form der reinen 2,4'- und 4,4'-lsomeren oder von deren Mischungen. Roh-MDI enthält neben dem sogenannten Zweikern-MDI auch mehrkernige Varianten. Entsprechendes gilt für Tolylendiisocyanat (TDI), das in Form mehrerer lsomerer und auch mehrkerniger Produkte verwandt werden kann. Weitere übliche Polyisocyanate sind Isophorondiisocyanat (IPDI), Diisocyanatonaphthalin (NDI), Triisocyanatotriphenylmethan und Hexamethylendiisocyanat (HDI). Polyisocyanate kommen in monomerer, dimerer, trimerer, der Biuret- und der Allophanat-Form vor und sind in diesen Formen einsetzbar. Erfindungsgemäß können daraus erhaltene Prepolymere eingesetzt werden, nachdem sie für die erfindungsgemäße Verwendung funktionalisiert worden sind.

Es können auch andere in der Technik bekannte Polyisocyanate eingesetzt werden. Besonders bevorzugt sind erfindungsgemäß jedoch aliphatische Polyisocyanate, insbesondere auch wegen der geringen Tendenz der daraus hergestellten Schäume zum Vergilben, sowie MDI und TDI.

Für die Herstellung der Prepolymere können übliche Polyole eingesetzt werden. Besonders geeignet sind Polyesterpolyole und Polyetherpolyole, wie sie in der Literatur vielfach beschrieben sind, insbesondere solche mit einer OH-Zahl im Bereich von 30 bis 300. Darüber hinaus können hydroxylgruppenhaltige Pflanzenöle und modifizierte hydroxylgruppenhaltige Pflanzenöle eingesetzt werden mit einer OH-Zahl im Bereich von bevorzugt 100 bis 300. Besonders geeignet ist von letzteren Rizinusöl mit einer OH-Zahl von 150 bis 160 oder modifiziertes, insbesondere ethoxyliertes Rizinusöl mit einer OH-Zahl von >80.

Besonders bevorzugte Silan-Termini sind Trimethoxysilyl- und Triethoxysilylgruppen.

Zur Ausbringung der Prepolymerkomponente aus den Druckdosen enthält die erfindungsgemäße Prepolymerabmischung eine Treibmittelkomponente, beispielsweise niedrig siedende Fluorkohlenwasserstoffe, Kohlenwasserstoffe und/oder Ether. Besonders bevorzugt sind die Fluorkohlenwasserstoffe R124, R125, R134a, R142b, R143 und R152a, die reinen Kohlenwasserstoffe Propan, Butan und Isobutan sowie Dimethylether. Weiterhin können CO₂, N₂O oder N₂ als Treibmittel zugegen sein. Beliebige Kombinationen dieser Gase sind möglich. Bei Druckdosenformulierungen sind Treibgasgehalte von 5 bis 40 Gew.-%, insbesondere 5 bis 20 Gew.-%, bezogen auf die gesamte Prepolymerabmischung, bevorzugt. Der Gehalt an unter den herrschenden Druckbedingungen nicht kondensierbaren Gasen sollte so bemessen sein, daß das auf den Leerraum des Druckbehälters bezogene Volumen einen Druck von etwa 8 bis 10 bar ergibt, je nach der einschlägigen nationalen Vorschrift für Druckbehälter (Aerosoldosen). Da bei der Vernetzung kein CO₂ freigesetzt wird, muß genügend Treibgas sowohl für die Ausbringung als auch für die Verschäumung vorhanden sein.

Die erfindungsgemäße Prepolymerabmischung enthält auf diesem Gebiet übliche Zusätze, wie beispielsweise Flammschutzmittel, Zellregulantien, Schaumstabilisatoren, Viskositätsregulierer und Weichmacher. Als Flammschutzmittel kommen u.a. auf dem Gebiet bekannte phosphorhaltige Verbindungen, insbesondere Phosphate und Phosphonate in Frage, beispielsweise Triethylphosphat oder Trichlorpropylphosphat. Diese Verbindungen haben gleichzeitig weichmachende und viskositätsregulierende Eigenschaften. Besonders bevorzugt sind Kombinationen von Phosphaten oder Phosphonaten einerseits und Polyesterolen oder Rizinusöl andererseits, die die Herstellung von flammhemmend eingestellten B2-Schäumen nach DIN 4102 erlauben. Als weitere Flammschutzmittel können Diphenylkresylphosphat, Triphenylphosphat, Dimethylmethanphosphonat und dergleichen genannt werden. Ferner können Chlorparaffine zu diesem Zweck eingesetzt werden, wie auch halogenierte Polyester- und Polyetherpolyole, beispielsweise handelsübliches bromiertes Polyetherpolyol. Letzteres dient gleichzeitig als Polyolkomponente zur Herstellung des Prepolymers.

Als Zellregulantien werden übliche eingesetzt, wie sie beispielsweise auf Basis von Silikon im Handel erhältlich sind. In Frage kommt hier insbesondere auch vernetzungsfähiges flüssiges Polybutadien. Bei den Stabilisatoren handelt es sich um handelsübliche Silikonstabilisatoren.

Zur Erhöhung der Lagerstabilität der Prepolymerabmischungen kann es zweckmäßig sein, reaktive Silane zuzusetzen, wie Tetramethoxysilan, Tetraethoxysilan oder auch Trimethoxymethylsilan - oder Trimethoxyvinyl, die alle geeignet sind, Wasser abzufangen. Zweckmäßigerweise liegt der Gehalt bei ≤ 3 Gew.-%, bezogen auf die Prepolymerabmischung, insbesondere bei 4 bis 1,5 Gew.-%. Der Zusatz von Vinylsilanen kann für eine weitergehende Vernetzung genutzt werden.

Die Prepotymerabmischung hat, ohne zugesetzte Treibmittelkomponente, zweckmäßigerweise eine Anfangs-Gebrauchsviskosität bei 20°C von 5.000 bis 20.000 mPa.s und vorzugsweise von 8.000 bis 15.000 mPa.s. Der Gehalt an Silan-Termini, wie vorstehend definiert, beträgt in der Regel 5 bis 50 Gew.-% und vorzugsweise 10 bis 30 Gew.-%, jeweils bezogen auf das Prepolymer.

Es ist zweckmäßig, der erfindungsgemäßen Prepolymerabmischung zur Förderung der Vernetzungsreaktion einen Katalysator zuzusetzen. Als Katalysatoren kommen für 1 K-Druckdosenschäume insbesondere Aminverbindungen in Frage, wie beispielsweise Triethylendiamin, Trimethytaminoethylpiperazin, Pentamethyldiethylentriamin. Tetramethyliminobispropylamin und Bis(dimethylaminopropyl)-N-isopropanolamin sowie Dimorpholinodiethylether. Weitere geeignete Katalysatoren sind solche auf Basis von organischen oder anorganischen Schwermetallverbindungen, wie beispielsweise Kobaltnaphthenat, Dibütylzinndilaurat, Zinnmercaptide, Zinndichlorid, Zirkontetraoctoat, Antimondioctoat, Bleidioctoat, Metall-, insbesondere Eisenacetylacetonat. Es handelt sich dabei in der Regel um die gleichen Katalysatoren, wie sie auch zur Bildung des Prepolymers eingesetzt werden können.

Als Katalysatoren sind auch Säuren geeignet, z. B. Ameisensäure, Essigsäure, Dibutylphosphat oder auch Benzoylchlorid, welches nach Reaktion mit Wasser HCL freisetzt, ferner allgemein Carbonsäuren, Dicarbonsäuren, Lewissäuren, wie die genannten Metallkatalysatoren und BF₃, B(OR)₃, AlCl₃, AlMe₃, SO₃, Halogenwasserstoffsäuren sowie Ag- und Pt-Verbindungen.

Für 1,5K- und 2K-Schäume wird der Katalysator zweckmäßigerweise zusammen mit dem Vernetzer separat von der Prepolymerabmischung gehalten, etwa in einer zur Aktivierung der Prepolymerabmischung auszulösenden Vernetzerhülse. Als Vernetzer kommt insbesondere Wasser in Frage. Als Katalysator können die vorstehend genannten verwandt werden, jedoch haben sich hier insbesondere Ammonium-, Alkali- und Erdalkalihydroxide als effektive Katalysatoren herausgestellt. Besonders geeignet ist wässriges oder methanolisches KOH, beispielsweise in Form einer 1 bis 10 %igen Lösung. Generell können wässrige Lösungen oder Aufschlämmungen von Metallhydroxiden eingesetzt werden.

Die erfindungsgemäß eingesetzten Silan-terminierten Prepolymere sind an und für sich bekannt, wurden jedoch bisher noch nicht zur Erzeugung von Dämmschäumen herangezogen. Sie können aus üblichen Polyurethan-Prepolymeren hergestellt werden, indem das Prepolymer mit einem geeignet funktionalisierten Silan umgesetzt wird. Bei dem Prepolymer kann es sich einerseits um ein Isocyanat-terminiertes Prepolymer handeln, andererseits aber auch um ein OH- oder NH₂-funktionalisiertes Prepolymer. OH-funktionalisierte Prepolymere werden beispielsweise bei der Reaktion von Polyisocyanaten mit einem Polyolüberschuß erhalten, NH₂-terminierte durch Umsetzung eines Isocyanat-terminierten Prepolymers mit einem Polyamin.

Zur Einführung der Silyl-Termini werden die Prepolymere mit den genannten Funktionalitäten mit einem Silan der nachstehenden Formel umgesetzt

X-(CH₂)ₙ-Si(OR)ₓ(R)₃₋ₓ

worin R und x wie oben definiert sind, n für eine ganze Zahl von 2 bis 10 steht und X für eine mit NCO-, OH- oder NH₂-Gruppen reaktive Funktion steht. Des weiteren können polyfunktionelle Silane verwandt werden, etwa der Formel

HN [(CH₂)ₙ-Si(OR)ₓ(R)₃₋ₓ]₂.

Eine mit NCO-Gruppen reaktive Funktion weist ein reaktives Wasserstoffatom auf, d.h. eine NH₂-, NH-, OH- oder SH-Gruppe. Ferner sind mit NCO-Gruppen reaktive Funktionen Epoxygruppen, die zu Oxazolidonen abreagieren. Als gegenüber OH- und NH₂-Funktionen des Prepolymers reaktive Gruppen kommen in erster Linie Isocyanatgruppen in Frage.

Im einzelnen wären als Reagentien für die Umfunktionalisierung der Polyisocyanat-Prepolymere insbesondere solche Verbindungen zu nennen, bei denen R für CH₃ oder C₂H₅ steht, x 3 ist, n 2 oder 3 ist und X für NH₂, NCO, SH, [(RO)₃Si(CH₂)ₙ-]NH, NHR', worin R' Alkyl, Cycloalkyl oder Aryl ist, NH-CO-NH₂, NH-(Alkylen)-NH₂, Glycidoxy, N(CH₂CH₂OH)₂ und dergleichen.

Die Umsetzung der Polyurethan-Prepolymere mit den funktionellen Silanen findet unter üblichen Bedingungen in einer Weise statt, daß alle funktionellen Gruppen des Prepolymeres mit dem jeweils eingesetzten Silan abreagieren. Die Reaktion kann im Reaktor durchgeführt werden, jedoch auch unter üblichen Bedingungen in der Aerosoldose. Dem Fachmann sind derartige Reaktionen geläufig.

Bei OH-terminierten Prepolymeren muß bei Umsatz mit OCN Si(OR)₃ nur ein Teil der OH-Gruppen reagieren, das Ziel Isocyanat-frei kann auch so erreicht werden.

Die Erfindung betrifft ferner die Verwendung vorstehend genannter Prepolymerabmischungen zur Herstellung von Schäumen, daraus hergestellte Schaumprodukte sowie 1K-, 1,5K- und 2K-Druckdosen, die die genannten Prepolymermischungen, gegebenenfalls zusammen mit einer oder mehreren weiteren separaten Komponenten, enthalten.

Die Erfindung wird durch das nachstehende Beispiel erläutert:

### Beispiel 1:

200 g eines mit Triethoxysilylgruppen terminierten Prepolymers auf Basis von Isophorondiisocyanat und Polyetherpolyolen werden in einer handelsüblichen Zweikomponenten-Druckdose mit 2,5 g Silikonstabilisator versetzt.

In die Vernetzerhülse werden 5g 7%ige KOH gegeben. Die Druckdose wird verschlossen und mit 20 g Isobutan versetzt.

Nach dem Auslösen der Dose wird kräftig geschüttelt und das Ventil geöffnet. Es ergibt sich ein weich-elastischer Schaum, der in seiner Feinstruktur Schaumzellen mit Stegen und Fenstern erkennen läßt.

Die Vernetzung der Prepolymerabmischung mit dem Inhalt der Vernetzerhülse ist außerordentlich schnell und nach 60 sek. praktisch abgeschlossen. Die Reaktionszeit kann durch Verwenden langsamer wirkender Katalysatoren, wie beispielsweise Dibutylzinndilaurat verlängert werden.

### Beispiel 2 und 3:

Ein 1K-Prepolymerzusammensetzung wurde aus den folgenden, Komponenten hergestellt:

### Prepolymer 1:

TDI-Prepoleymer mit einem NCO-Gehalt von 10,5 %, hergestellt durch die Umsetzung von 2,4-Toluylendiisocyanat im 20fach molarem Überschuß mit einem Polypropylenglykol der Molmasse (Gewichtsmittel) 400 g/mol und nachfolgener Entfernung des überschüssigen Diisocyanats mittels Dünnschichtdestillation, TDI-Gehalt < 1 %.

### Prepolymer 2:

Herstellung wie Prepolymer1, das Polypropylenglykol ist ein 1:1-Gemisch aus einem Polypropylenglykol mit Molgewicht (Gewichtsmittel) von ca. 1000 g/mol und einem Polypropylenglykol mit eine Molgewicht von ca. 2000 g/mol, NCO-Gehalt ca. 3,5 %, TDI-Gehalt < 1 %.

### Silquest A-1170:

Bis-(trimethoxysilylpropyl)-amin, Firma Witco

### Dynasilan VTMO:

Vinyltrimethoxysilan, Hüls AG

### Tegostab:

Silikonschaumstabilisator, Firma Goldschmidt

### Treibgasmischung:

R 134a, R 152a, Dimethylether im Verhältnis 3:6:1

Die Propolymere werden zusammen mit allen Additiven in die Dose gefüllt, das Ventil aufcrimpt, mit Treibgas beaufschlagt und solange geschüttelt, bis sich das Treibgas mit dem Prepolymer vermischt hat. Dann wird das Aminosilan durch das Ventil in ca. drei Portionen nachgedrückt, so daß sich die Dose durch die Reaktion von Amin mit lsocyanat nicht über 40°C erwärmt. Um eine Verdünnung herbeizuführen, kann es vorteilhaft sein, das Amin in verflüssigtem Treibgas zu lösen und zusammen mit der Treibgasmischung zuzugeben.

Dies Vorgehensweise ist dann besonders vorteilhaft, wenn Isocyanatprepolymere mit hohem Isocyanatgehalt bereits eine hohe Viskosität aufweisen (Prepolymer 1 mit ca. 50000 mPas/45°C) und eine weitere Umsetzung mit Aminosilan außerhalb der Dose zu nicht mehr handhabbaren Produkten führen würde.

Im Gegensatz zum ersten Beispiel mit der 1,5K-Dosenformulierung wird durch den Einsatz von Prepolymeren mit einem höheren NCO-Gehalt sowie durch den Einsatz eines Aminosilans mit zwei Trimethoxysilylgruppen eine höhere Vernetzungsdichte und damit auch ein harter Schaum erhalten.

Die Durchhärtungsgeschwindigkeit des Schaums kann mit der Katalysatorkonzentration gesteuert werden, wie durch die Klebfreizeit deutlich wird.

| | Beispiel 2 | Beispiel 3 |
|---|---|---|
| Prepolymer 1 | 556 | 388 |
| Prepolymer 2 | | 194 |
| Silquest A-1170 | 259 | 209 |
| Dynasilan VTMO | 7 | 8 |
| Tegostab B 1048 | 18 | |
| Tegostab B 8404 | | 19 |
| Dibutylzinndiacetylacetonat | 11 | 27 |
| Treibgasmischung | 149 | 155 |
| Summe | 1000 | 1000 |
| | | |
| Zellstruktur | mittel-feinzellig | feinzellig |
| Klebfreizeit | ca.20 min | ca. 5 min |
| Härte | harter nichtspröder Schaum | halbharter, nicht-spröder Schaum |
| Aushärtezeit | ca. 24 h | ca.24 h |

## Patentansprüche

1. Prepolymerabmischung zur Erzeugung von Dicht und Dämmschäumen, wobei die Prepolymerabmischung eine Prepolymerkomponente, eine Treibgaskomponente und zur Schaumbildung benötigte übliche Zusatzstoffe enthält, **dadurch gekennzeichnet, daß** die Prepolymerkomponente ein Silan-terminiertes Polyurethan-Prepolymer mit wenigstens zwei Si(OR)ₓ(R)₃₋ₓ-Gruppen im Molekül ist, wobei R jeweils für einen Alkylrest mit 1 bis 6 Kohlenstoffatomen steht und x eine ganze Zahl von 1 bis 3 ist.

2. Prepolymerabmischung nach Anspruch 1, **dadurch gekennzeichnet, daß** das Silan-terminierte Prepolymer ein Prepolymer auf Basis eines Polyisocyanats einerseits und eines Polyois, Polyetherols, Polyesterols oder hydroxygruppenhaltigen Pflanzenöls andererseits ist.

3. Prepolymerabmischung nach Anspruch 1 oder 2, **dadurch gekennzeichnet, daß** das Polyisocyanat Diisocyanatodiphenylmethan, Tolylendiisocyanat, Hexamethylendiisocyanat, Isophorondiisocyanat, Naphthalindiisocyanat, ein Dimer, Trimer, Biuret oder Allophanat davon oder eine Mischung eines oder mehrerer derselben ist.

4. Prepolymerabmischung nach Anspruch 3, **dadurch gekennzeichnet, daß** das Polyisocyanat Diphenylmethandiisocyanat und/oder Hexamethylendiisocyanat ist.

5. Prepolymerabmischung nach einem der vorstehenden Ansprüche, **dadurch gekennzeichnet, daß** x 2 oder 3 ist.

6. Prepolymerabmischung nach einem der vorstehenden Ansprüche, **dadurch gekennzeichnet, daß** R für Methyl und/oder Ethyl steht.

7. Prepolymerabmischung nach einem der vorstehenden Ansprüche, **dadurch gekennzeichnet, daß** die Treibgaskomponente eine auf Basis von Kohlenwasserstoffen, fluorierten Kohlenwasserstoffen und/oder Dimethylether ist.

8. Prepolymerabmischung nach einem der vorstehenden Ansprüche, **dadurch gekennzeichnet, daß** sie als Zusatz Flammschutzmittel, Zellregulantien, Stabilisatoren, Viskositätsregulatoren und/oder Weichmacher enthält.

9. Prepolymerabmischung nach einem der vorstehenden Ansprüche, **dadurch gekennzeichnet, daß** sie einen Katalysator enthält.

10. Prepolymerabmischung nach Anspruch 9, **dadurch gekennzeichnet, daß** der Katalysator einer auf Basis von Aminen oder Schwermetallsalzen, Metallhydroxiden oder Säuren ist.

11. Druckdose, enthaltend eine Prepolymerabmischung nach einem der Ansprüche 1 bis 10 zur Erzeugung von Einkomponenten-Dämmschäumen.

12. Druckdose, enthaltend eine Prepolymerabmischung nach einem der Ansprüche 1 bis 8 sowie, als separate zweite Komponente, eine wässrige Lösung eines Ammonium-, Alkali- oder Erdalkalihydroxids oder eine Säure, zur Erzeugung von Zweikomponentenschäumen.

13. Druckdose nach Anspruch 12, **dadurch gekennzeichnet, daß** die separate zweite Komponente eine wässrige KOH-Lösung ist.

## Claims

1. Prepolymer mixture for producing sealing and insulating foams, wherein the prepolymer mixture contains a prepolymer component, a blowing gas component and conventional additives required for the foam formation, **characterised in that** the prepolymer component is a silane terminated polyurethane prepolymer with at least two Si(OR)ₓ(R)₃₋ₓ groups in the molecule, R representing an alkyl radical with 1 to 6 carbon atoms and x being a whole number from 1 to 3.

2. Prepolymer mixture as claimed in Claim 1, **characterised in that** the silane terminated prepolymer is a prepolymer based on a polyisocyanate on the one hand and a polyol, polyetherol, polyesterol or vegetable oil containing hydroxy groups on the other hand.

3. Prepolymer mixture as claimed in Claim 1 or 2, **characterised in that** the polyisocyanate is diisocyanatodiphenylmethane, tolylenediisocyanate, hexamethylenediisocyanate, isophorondiisocyanate, naphthalinediisocyanate, a dimer, trimer, biuret or allophanate thereof or a mixture of one or more of the same.

4. Prepolymer mixture as claimed in Claim 3, **characterised in that** the polyisocyanate is diphenylmethanediisocyanate and/or hexamethylenediisocyanate.

5. Prepolymer mixture as claimed in one of the preceding claims, **characterised in that** x is 2 or 3.

6. Prepolymer mixture as claimed in one of the preceding claims, **characterised in that** R represents methyl and/or ethyl.

7. Prepolymer mixture as claimed in one of the preceding claims, **characterised in that** the blowing gas component is based on hydrocarbons, fluorinated hydrocarbons and/or is dimethylether.

8. Prepolymer mixture as claimed in one of the preceding claims, **characterised in that** it contains foam regulators, stabilisers, viscosity regulators and/or plasticizers as an additional flame-proofing agent.

9. Prepolymer mixture as claimed in one of the preceding claims, **characterised in that** it includes a catalyst.

10. Prepolymer mixture as claimed in Claim 9, **characterised in that** the catalyst is based on amines, heavy metal salts, metal hydroxides or acids.

11. Pressurised container containing a prepolymer mixture as claimed in one of Claims 1 to 10 for producing single component insulating foams.

12. Pressurised container containing a prepolymer mixture as claimed in one of Claims 1 to 8 and, as a separate second component, an aqueous solution of an ammonium, alkali or alkaline earth hydroxide or an acid for producing two component foams.

13. Pressurised container as claimed in Claim 12, **characterised in that** the separate second component is an aqueous KOH solution.

## Revendications

1. Mélange prépolymère pour la préparation de matières alvéolaires d'étanchéité et d'isolation, dans lequel le mélange de prépolymère contient un composant prépolymère, un composant gaz propulseur et des additifs classiques nécessaires à la formation de matière alvéolaire, **caractérisé en ce que** le composant prépolymère est un prépolymère de polyuréthanne à terminaison silane ayant au moins deux groupes Si(OR)ₓ(R)₃₋ₓ dans la molécule, tandis que R désigne à chaque fois un reste alkyle ayant 1 à 6 atomes de carbone et x est un nombre entier de 1 à 3.

2. Mélange prépolymère selon la revendication 1, **caractérisé en ce que** le prépolymère à terminaison silane est un prépolymère à base d'un polyisocyanate d'une part et d'un polyol, d'un polyétherol, d'un polyestérol ou d'une huile végétale contenant des groupes hydroxy d'autre part.

3. Mélange prépolymère selon la revendication 1 ou 2, **caractérisé en ce que** le polyisocyanate est le diisocyanatodiphénylméthane, le toluène-diisocyanate, l'hexaméthylènediisocyanate, l'isophoronediisocyanate, le naphtalènediisocyanate, un dimère, trimère, biuret ou allophanate de ceux-ci, ou un mélange d'un ou plusieurs d'entre eux.

4. Mélange prépolymère selon la revendication 3, **caractérisé en ce que** le polyisocyanate est le diphénylméthanediisocyanate et/ou l'hexaméthylènediisocyanate.

5. Mélange prépolymère selon l'une des revendications précédentes, **caractérisé en ce que** x est 2 ou 3.

6. Mélange prépolymère selon l'une des revendications précédentes, **caractérisé en ce que** R désigne le méthyle et/ou l'éthyle.

7. Mélange prépolymère selon l'une des revendications précédentes, **caractérisé en ce que** le composant gaz propulseur est un composé à base d'hydrocarbures, d'hydrocarbures fluorés et/ou d'éther de diméthyle.

8. Mélange prépolymère selon l'une des revendications précédentes, **caractérisé en ce qu'**il contient comme additifs des agents ignifugeants, des agents de régulation des pores, des stabilisants, des régulateurs de viscosité et/ou des plastifiants.

9. Mélange prépolymère selon l'une des revendications précédentes, **caractérisé en ce qu'**il contient un catalyseur.

10. Mélange prépolymère selon la revendication 9, **caractérisé en ce que** le catalyseur est à base d'amines ou de sels de métal lourd, d'hydroxydes de métal ou d'acides.

11. Cartouche, contenant un mélange prépolymère selon l'une des revendications 1 à 10 pour la préparation de matières alvéolaires d'isolation monocomposant.

12. Cartouche, contenant un mélange prépolymère selon l'une des revendications 1 à 8, ainsi que, comme deuxième composant séparé, une solution aqueuse d'un hydroxyde d'ammonium, de métal alcalin ou de métal alcalino-terreux, ou un acide, pour la préparation de matières alvéolaires à deux composants.

13. Cartouche selon la revendication 12, **caractérisée en ce que** le deuxième composant séparé est une solution aqueuse de KOH.
